(19) Europäisches Patentamt
European Patent Office
Office européen des brevets

(11) EP 0 768 278 B1

(12) **EUROPEAN PATENT SPECIFICATION**

(45) Date of publication and mention of the grant of the patent:
**14.06.2000 Bulletin 2000/24**

(51) Int Cl.[7]: **C02F 1/22**, C02F 1/58, C02F 1/12, F25C 3/04

(21) Application number: **96302613.3**

(22) Date of filing: **15.04.1996**

(54) **Wastewater treatment method by atomizing and freezing**

Methode zur Abwasserreinigung durch Zerstäuben und Ausfrieren

Méthode pour le traitement des eaux polluées par atomisation et congélation

(84) Designated Contracting States:
**AT CH DE DK ES FI FR IT LI PT SE**
Designated Extension States:
**SI**

(30) Priority: **11.10.1995 CA 2160329**

(43) Date of publication of application:
**16.04.1997 Bulletin 1997/16**

(73) Proprietor: **White, Jeffrey A.**
**Ottawa, Ontario K1G 4J7 (CA)**

(72) Inventor: **White, Jeffrey A.**
**Ottawa, Ontario K1G 4J7 (CA)**

(74) Representative: **Rees, David Christopher et al**
**Kilburn & Strode**
**20 Red Lion Street**
**London WC1R 4PJ (GB)**

(56) References cited:
**WO-A-88/04193** **DE-A- 1 517 429**
**US-A- 5 400 619**

- **DATABASE WPI Section Ch, Week 9116 Derwent Publications Ltd., London, GB; Class D15, AN 91-112548 XP002022895 & JP-A-03 052 685 (FUJI PHOTO FILM KK) , 6 March 1991 & PATENT ABSTRACTS OF JAPAN vol. 15, no. 197 (C-0833), 21 May 1991**
- **DATABASE WPI Section Ch, Week 9418 Derwent Publications Ltd., London, GB; Class D15, AN 94-149393 XP002022864 & SU-A-1 798 313 (YAKUTYA SECT SIBE HYDROTECH IRRIG INST) , 28 February 1993**
- **DATABASE WPI Section Ch, Week 9515 Derwent Publications Ltd., London, GB; Class D15, AN 95-109745 XP002022865 & JP-A-07 031 966 (NITTO KIKAI KK) , 3 February 1995**
- **DATABASE WPI Section Ch, Week 8729 Derwent Publications Ltd., London, GB; Class K07, AN 87-202381 XP002022866 & JP-A-62 130 395 (NGK INSULATORS KK) 12 June 1987**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 768 278 B1

## Description

The present invention pertains to the field of waste water treatment. In particular, the present invention provides a method for waste water treatment that is particularly effective in cold climates, such a those experienced in alpine areas or in Northern regions in winter.

Waste water is produced in large quantities throughout the year, by every community. By the term 'waste water' is meant sanitary waste disposal water, i.e., the flow from sanitary sewers, industrial effluent, i.e., the flow from factories, mills, refineries, and other users of water in industrial settings, commercial effluent, i.e., the flow of waste water from service industries like restaurants and cleaning industries. In developed nations, it is desirable that 100% of waste water produced be treated in some way to ensure minimal negative environmental impact. To this end, most cities have built large sewage and waste water treatment facilities. These facilities are extremely expensive to build, operate and maintain, and they are of limited capacities.

If properly planned, waste water treatment facilities operate efficiently on a flow-through basis, and are able to process all of the waste water produced in any given period of time. However, efficient operation on such a basis is more difficult during winter months, when settling tanks may freeze, sewage lagoons freeze, rivers freeze over, but sewage keeps flowing in. Many facilities become over burdened by springtime, and it will be appreciated that by the time of the spring thaw, it has often been necessary to release untreated or partially treated waste water into the environment (i.e., receiving waters).

Furthermore, there are some communities located in Northern climes, or areas where sewage or waste water treatment is substantially impossible because the amount that must be stored over freezing months so far exceeds the amount that can practicably be processed during the milder months that a conventional treatment facility is not feasible. There are, similarly, communities such as ski and winter resort communities that have relatively small populations of permanent residents, but that support very large populations of winter visitors. These communities either do not have a summertime need for high capacity waste water treatment facilities, or must subject existing facilities to highly fluctuating seasonal loads.

There are also industrial processes carried out in Northern locations, for instance oil recovery from oil sands that use large quantities of water which is not easily processed with conventional technology. Food processing industries, moreover, are often in maximum production in the freezing months following a harvest, and therefore produce waste water during those months.

There are four basic principal concerns in dealing with normal sanitary waste water treatment. First, one must be concerned with the volume of waste water that is being treated. This is the concern that most affects cost: the object is to handle the largest volume of waste water by separation of the waste and nutrients from the water for the smallest expenditure.

Secondly, one is concerned with lowering the nitrogen content of the waste water to obtain treated water substantially free of nitrogen. Nitrogen, usually present as $NH_3$, $NH_4^+$, $NO_3^-$, or $NO_2^-$ in waste water, is a potent pollutant because it provides an essential nutrient to many microorganisms that may exist in water destined for human consumption.

Thirdly, it is essential to lower bacterial counts in treated waste water to below mandated levels, which levels are generally in the order of 100 - 1000 per 100ml.

Lastly, for aesthetic water quality reasons, it is necessary to lower phosphorous levels in waste water. Phosphorous, generally present as soluble phosphate ions in waste water, should be preferably kept below about 1 mg/l and preferably below 0.05 mg/l, to restrict algae and weed growth, since algae will deplete $O_2$ in receiving waters.

The present invention, non-biological in basic concept, therefore, achieves each of the foregoing basic concerns, and provides a cost efficient method for treating large quantities of waste water from residential, commercial or industrial sources, in cold climates, to produce clean water without the need to store the waste water until milder weather prevails. The present invention has identified and advantageously utilizes a number of phenomena manifested during atomization and phase-change from liquid to solid of waste water under low temperature (sub-zero) atmospheric conditions. Moreover, the present invention does so in a process that differentiates it from previous attempts, all relatively unsuccessful, to utilize psychromechanicals in waste water treatment. For instance, in a study entitled "Low-Temperature Sewage Disposal Through Snowmaking", by Zapf-Gilge, Russell and Mavinic, discussed the effects of concentrating impurities in the unfrozen portion of an ice pellet or similar structure. Zapf-Gilge et al, however, did not obtain viable results, finding unacceptably high concentrations of nitrogen and phosphorous in the resulting snowmelt water. Their study became, then, directed to suggestions on handling of the chronological melt fractions of a snowpack. The short coming of such a manner of approach is that it does not provide a method of treating waste water, it merely concentrates the impurities in the waste water, and results in a problem in the discharge water.

The present invention, however, provides a treatment method that does not merely concentrate nutrients and contaminants. The present invention essentially removes substantially all nitrogen from the waste water, while at the same time precipitating the phosphates therefrom as benign insoluble alkaline salts. Moreover, the method of the present invention results in virtually complete elimination of bacteria in the waste water.

In a broad aspect, therefore, the present invention relates to a method of processing waste water comprising atomizing said waste water under selected atmospheric conditions to achieve substantially complete phase change of said water.

In another broad aspect, the present invention relates to a method of conversion of soluble phosphate ions in waste water that includes phosphate ions, ammonia gas, ammonium ions, calcium ions and magnesium ions, comprising atomization of said waste water under atmospheric conditions appropriate for the substantially complete phase change of said waste water to ice crystals or water vapour, whereby ammonium ions under the influence of increased pH in said waste water form ammonia gas, and phosphate ions in said waste water combine with calcium or magnesium ions as calcium phosphate and magnesium phosphate respectively and precipitate as insoluble salts.

In drawings that illustrate the present invention by way of example:

Figure 1 is a schematic of the method of the present invention;
Figure 2 is a flow/comparison chart illustrating the method of the present invention, and comparing it in relative quantitative terms with some typical basic conventional waste water treatment methods.

Referring to the drawings, in Figure 1, a typical installation and application of the present invention is illustrated schematically. A reservoir 4 of untreated or partially sewage, which may or may not have been permitted to settle somewhat, depending on the density of solids therein, and the local options for disposal of sludge, is pumped via a pipeline 3, to a treatment facility according to the present invention. A nozzle 1, is provided, preferably on a tower 2 (but not necessary). The nozzle is a compressed air type water atomization type, such as that described in U.S. Patent No. 5,135,167. These nozzles are modified as compared with those used in commercial snowmaking operations to ensure complete freeze out, and find excellent application in the present invention, because of their ability to finely atomize the total fluid stream passing through the nozzle. As the fluid is ejected from the nozzle under high air pressure of from $7.0 \times 10^4$ to $3.5 \times 10^5$ kg/m$^2$ (100 to 500 psia) or greater, the fluid will undergo a rapid pressure drop of from about $3.5 \times 10^5$ to about $1.1 \times 10^4$ kg/m$^2$ (500 psia to about 15 psia), causing atomization, and immediate evaporation of up to about 8% to 10% of the water content. In addition, carbon dioxide and some ammonia gas, $H_2S$, etc., which are volatile under these conditions, will be stripped from the atomized waste water droplets before the water forms ice crystals.

As ammonia gas volatilizes, the equilibrium between ammonia, $NH_3$ and ammonium ions will tend to shift, as follows:

$$\text{(normal)}\ NH_4^+ + OH^- \leftrightharpoons NH_3 + H_2O$$

$$(NH_3\ \text{volatilizing})\ NH_4^+ + OH^- \rightleftarrows NH_3 \uparrow + H_2O$$

Moreover, as $CO_2$, is stripped from the atomized waste water, the following occurs:

$$HCO_3^- \rightarrow CO_2 \uparrow + OH^-$$

$HCO_3^-$ is the usual form of $CO_2$ in aqueous solution. Therefore, as $CO_2$ is stripped, the aqueous solution will become more basic. Since the equilibrium constant Kb for ammonia, $1.8 \times 10^{-5}$ is calculated by

$$\frac{[NH_4^+]\,[OH^-]}{[NH_3]}$$

as $[OH^-]$ increases, i.e., as pH increases, then for Kb to be maintained, $[NH_4^+]$ will decrease, and $[NH_3]$ will increase absolutely, but decrease in solution slightly, due to continuing volatilization of $NH_3$.

Therefore, the first significant observation is that the method of the present invention results in a lowering of $NH_4^+$ concentration in the waste water. It is $NH_4^+$ that solubilizes $PO_4^{--}$ and $PO_3^{--}$ and in the waste water. As $NH_4^+$ decreases, then these phosphate ions will tend to combine with $Ca^{++}$, or $Mg^+$, found in the waste water, and precipitate out and remain as an insoluble salt on the ground matrix.

The method of the present invention, therefore, is effective to reduce $NH_3$, $NH_4^+$, $PO_3^{--}$ and $PO_4^{--}$ concentrations simultaneously, and by operating selectively in conditions resulting in substantially complete freeze out of the ice crystals, this goal is accomplished. Moreover, it is this essential feature of the present invention, substantially complete freeze out of the waste water crystals, which distinguishes the present invention from the failed experiments of the past in this area. If freeze-out is not complete, then a liquid aqueous fraction will continue to exist during the entire flight of the ice crystal (partly frozen). Such a liquid fraction will contain reactive $CO_2$, $NH_4^+$ and phosphates, that must be attended to on the ground. In essence, such a result is: untreated water up, untreated water down. The result of the present invention, however, is untreated water up, substantially pure water down, some harmless solid salts, harmless ammonia gas released, $CO_2$ released.

With regard to bacteria, moreover, the method of the present invention, by which complete freeze out of the atomized waste water is accomplished, will be lethal to substantially all bacteria. Bacteria found in waste water are unicellular, aqueous organisms. Incomplete freeze out of the waste water, as was the result accomplished in the prior failed experiments and studies, resulted in a large fraction of bacteria deposited into the snowpack, reduced in activity, but alive. In the method of the present invention, however, complete freeze through of the ice crystals results in complete killing of the resident bacteria, by either direct fracturing of the cell walls thereof by the expansive nature of the freezing process, or osmotic pressure rupturing of the walls as well as the temperature below which many types of bacteria will not survive. Only in the present 100% change of state process can these conditions be attained.

It will be understood from the foregoing discussion that an essential aspect of the present invention is substantially complete freezing through of the ice crystals formed by careful atomization and nucleation of a waste water stream.

With reference to Figure 1, this is accomplished by:

i) conducting the process only at relatively low temperature. Below 0°C wet bulb is essential. Below -5°C is preferable, and the range of -10°C and below is preferable still.

ii) For maximum freezing efficiency and spread, the ice crystals being projected from nozzle 1 should have a resultant flight direction of about 45° from the horizontal. This can be determined, on any given day, by determining the wind speed, and adjusting the angle of the nozzle. Wind speeds of >0 to 70 km/hr, preferably 5 km/hr to 70 km/hr are desirable, so that the crystals and by products will fall in a known area to create a snowpack 7, as shown in Figure 1. Nozzle angles, from the horizontal will vary from 0° to 90° and are chosen so that the combined effect of wind and elevation will be equivalent to 45° elevation in calm wind conditions. 45° is preferred to ensure a long flight time, complete freeze out and optimal spread of the snowpack.

iii) A compressed air nozzle, as described above is utilized. It will be noted that a hydraulic or airless nozzle may be used, but with less satisfactory freeze out results, and will require special nucleation agents. Using the compressed air nozzle will result in production of a significant number of very small droplets, that will experience better air stripping, better evaporation 8, better atomizing and relatively quick formation of a large number of small to medium sized ice crystals 5, that will freeze out completely before landing in and creating the snowpack 7. In addition, a fine haze of the very smallest ice particles 6 will form, and will not fall quickly due to low mass, better aerodynamics, and lower terminal velocity. This haze of crystals will create a zone of nucleation sites for any larger water droplets that may be falling and have not yet begun to freeze.

Referring now to Figure 2, typical results achievable with the method of the present invention, are compared to alternate methods. As well, the small difference in discharge water quality utilizing the present invention, between surface discharge or run-off water, and exfiltration water, i.e., water that has percolated through the ground into the water table is shown.

On the extreme right, raw sewage parameters are quantified. Treatment in a sewage lagoon, without aeration or spraying or filtration is shown in the next line, with typical results achieved with spray irrigation and finally with large scale filtration shown on the next two lines. It will be understood that the latter two results are normally striven for, and if achieved, are considered satisfactory for secondary level treatment standards. The following two lines of data records the results obtained from surface run-off and ground filtration of waste water treated according to the present invention. It will be noted that in every aspect, the results of the present invention meet or exceed the results obtained according to conventional waste water treatment (better than tertiary treatment).

On the left, and to the bottom of the chart, the method of the present invention is illustrated together with the effects of the natural forces that will act upon the waste water when it is treated according to the present invention. That is, the present invention essentially comprises the controlled atomization of waste water under selected atmospheric conditions. The actions of nature that occur after the present invention is carried out are not controllable, but the applicant has accounted for them in development of the present invention. For instance, the aging of a snowpack will occur naturally. The applicant can, and has demonstrated the beneficial effects occurring as a result of this natural process, but that is not a part of the present invention.

It is to be understood that the examples described above are not meant to limit the scope of the present invention. It is expected that numerous variants will be obvious to the person skilled in the field to which the present invention pertains without any departure from the scope of the invention. The appended claims, properly construed, form the only limitation upon the scope of the invention.

## Claims

1. A method of processing waste water which comprises atomizing the waste water under selected atmospheric conditions to achieve a substantially complete phase change of the water, the atomization being conducted at an atmospheric temperature of less than 0°C, wet bulb temperature.

2. A method as claimed in Claim 1, characterised in that the atomization is effected by spraying the waste water into the atmosphere utilizing compressed air.

3. A method as claimed in Claim 2, characterised in that the atomization is effected by spraying the waste water into the atmosphere in a direction of from 0° to 90° to the horizontal.

4. A method as claimed in any preceding Claim, characterised in that the atomization is conducted by spraying the waste water from a nozzle mounted on a tower adjacent a catchment area for collecting ice crystals produced by the phase change of the atomized waste water into ice crystals.

5. A method as claimed in Claim 4, characterised in that the atomization is conducted when prevailing wind conditions are such as to permit the ice crystals to fall into the catchment area in a predetermined manner.

6. A method of conversion of soluble phosphates from waste water that includes phosphate ions, ammonia gas, ammonium ions, calcium ions and magnesium ions, comprising the atomization of the waste water under atmospheric conditions appropriate for the substantially complete phase change of the waste water to ice crystals or water vapour, whereby ammonium ions under the influence of increased pH in the waste water form ammonia gas, and phosphate ions in the waste water combine with calcium or magnesium ions as calcium phosphate and magnesium phosphate respectively and then precipitate as insoluble salts.

## Patentansprüche

1. Verfahren zur Abwasserreinigung, bei welchem Abwasser in ausgewählten Atmosphären-Bedingungen zerstäubt wird, um eine im wesentlichen vollständige Phasenumwandlung des Wassers zu erreichen, wobei die Zerstäubung bei einer Atmosphären-Temperatur von unter 0 °C Feuchtkugeltemperatur durchgeführt wird.

2. Verfahren nach Anspruch 1, dadurch gekennzeichnet, daß die Zerstäubung durch Sprühen des Abwassers in die Atmosphäre unter Verwendung von Druckluft durchgeführt wird.

3. Verfahren nach Anspruch 2, dadurch gekennzeichnet, daß die Zerstäubung durch Sprühen des Abwassers in die Atmosphäre in einer Richtung von 0° bis 90° zur Waagrechten durchgeführt wird.

4. Verfahren nach irgend einem der vorhergehenden Ansprüche, dadurch gekennzeichnet, daß die Zerstäubung durch Sprühen des Abwassers aus einer Düse durchgeführt wird, welche auf einem Turm neben einem Auffangbereich zum Auffangen von Eiskristallen befestigt ist, welche durch die Phasenumwandlung des zerstäubten Abwassers in Eiskristalle erzeugt werden.

5. Verfahren nach Anspruch 4, dadurch gekennzeichnet, daß die Zerstäubung durchgeführt wird, wenn die vorherrschenden Windbedingungen derart sind, daß sie ermöglichen, daß die Eiskristalle auf vorgegebene Weise in den Auffangbereich fallen.

6. Verfahren zur Umwandlung löslicher Phosphate aus Abwasser, welches Phosphationen, Ammoniakgas, Ammoniumionen, Calciumionen und Magnesiumionen enthält, wobei das Abwasser in Atmosphären-Bedingungen zerstäubt wird, welche sich für die im wesentlichen vollständige Phasenumwandlung des Abwassers in Eiskristalle oder Wasserdampf eignen, und wobei Ammioniumionen unter dem Einfluß eines erhöhten pH-Wertes im Abwasser Ammoniakgas bilden und Phosphationen im Abwasser sich mit Calcium- oder Magnesiumionen zu Calciumphosphat bzw. Magnesiumphosphat verbinden und dann als unlösliche Salze ausgefällt werden.

## Revendications

1. Procédé de traitement des eaux usées, qui comprend l'atomisation des eaux usées dans des conditions atmosphériques choisies pour assurer un changement de phase sensiblement complet de l'eau, l'atomisation étant réalisée à une température atmosphérique inférieure à 0°C, température au thermomètre mouillé.

2. Procédé selon la revendication 1, caractérisé en ce que l'atomisation est effectuée en pulvérisant les eaux usées dans l'atmosphère en utilisant de l'air comprimé.

3. Procédé selon la revendication 2, caractérisé en ce que l'atomisation est effectuée en pulvérisant les eaux usées dans l'atmosphère dans une direction de 0 à 90° par rapport à l'horizontale.

4. Procédé selon l'une quelconque des revendications précédentes, caractérisé en ce que l'atomisation est réalisée en pulvérisant les eaux usées par une buse montée sur une tour adjacente à une zone collectrice pour recueillir les cristaux de glace produits par le changement de phase des eaux usées atomisées en cristaux de glace.

5. Procédé selon la revendication 4, caractérisé en ce que l'atomisation est effectuée lorsque les conditions de vent dominantes sont telles que les cristaux de glace puissent tomber dans la zone collectrice de manière prédéterminée.

6. Procédé de conversion de phosphates solubles d'eaux usées comprenant des ions de phosphate, du gaz ammoniac, des ions d'ammonium, des ions de calcium et des ions de magnésium, comprenant l'atomisation des eaux usées dans des conditions atmosphériques convenant au changement de phase sensiblement complet des eaux usées en cristaux de glace ou en vapeur d'eau, de manière que les ions d'ammonium, sous l'influence de l'augmentation du pH dans les eaux usées, forment du gaz ammoniac et que les ions de phosphate des eaux usées se combinent avec des ions de calcium ou de magnésium pour former du phosphate de calcium et du phosphate de magnésium, respectivement, puis précipitent sous forme de sels insolubles.

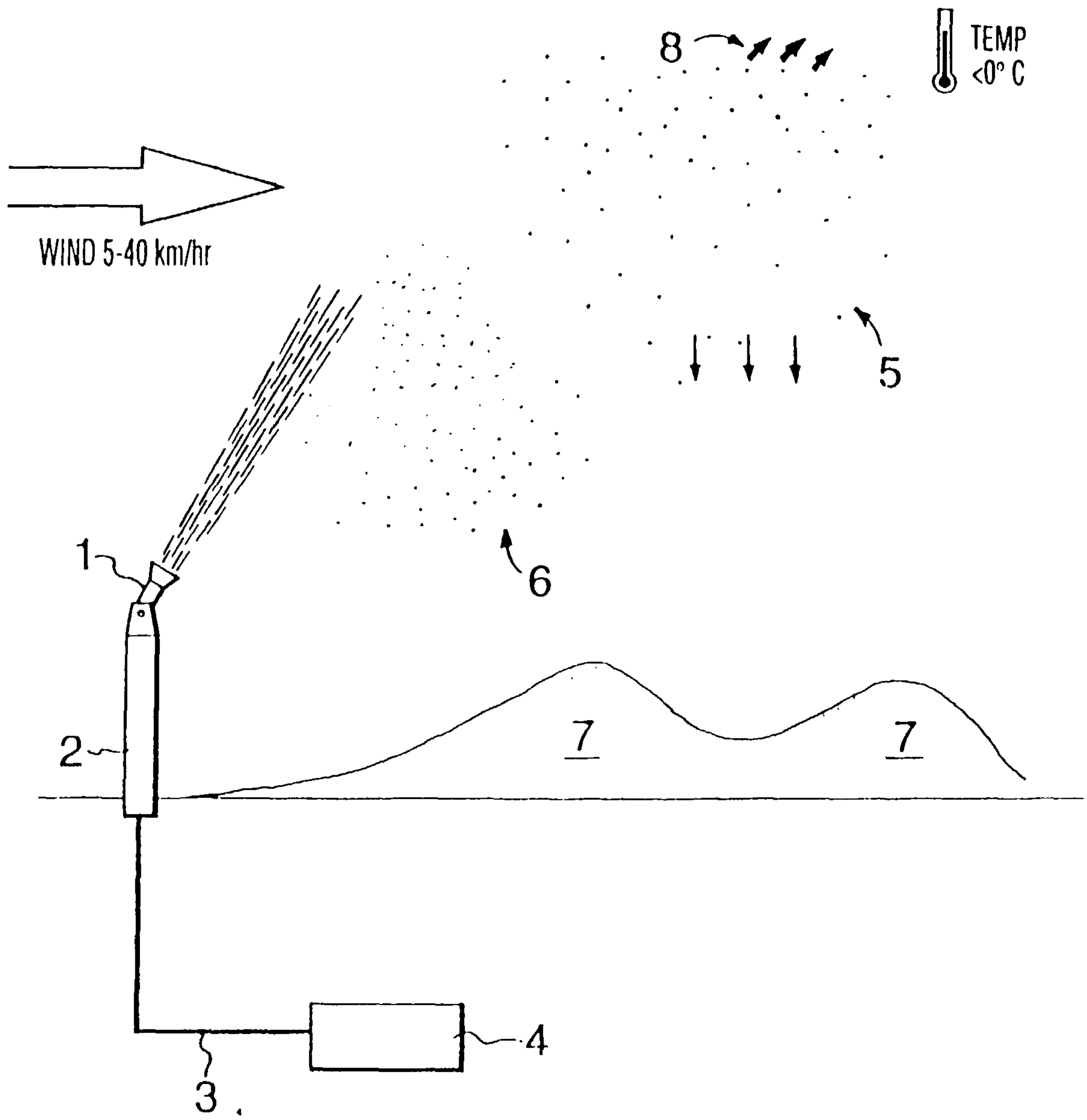


FIG. 1

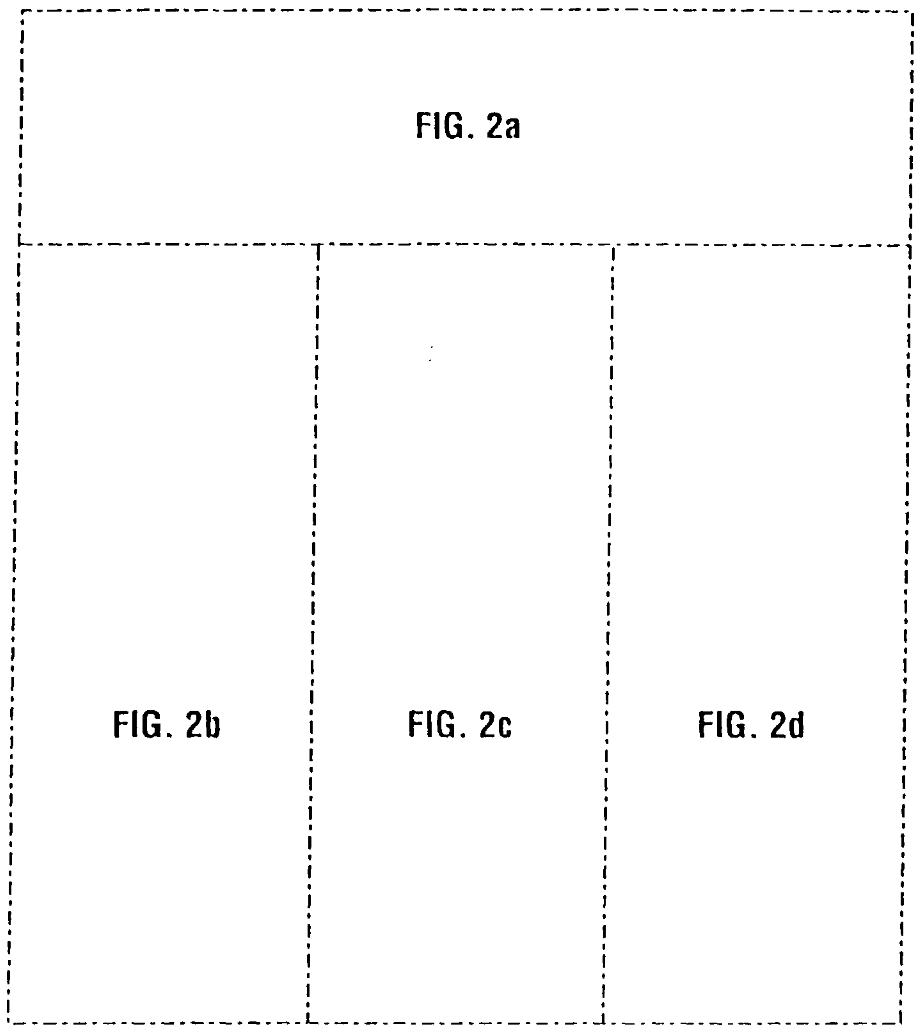


FIG. 2

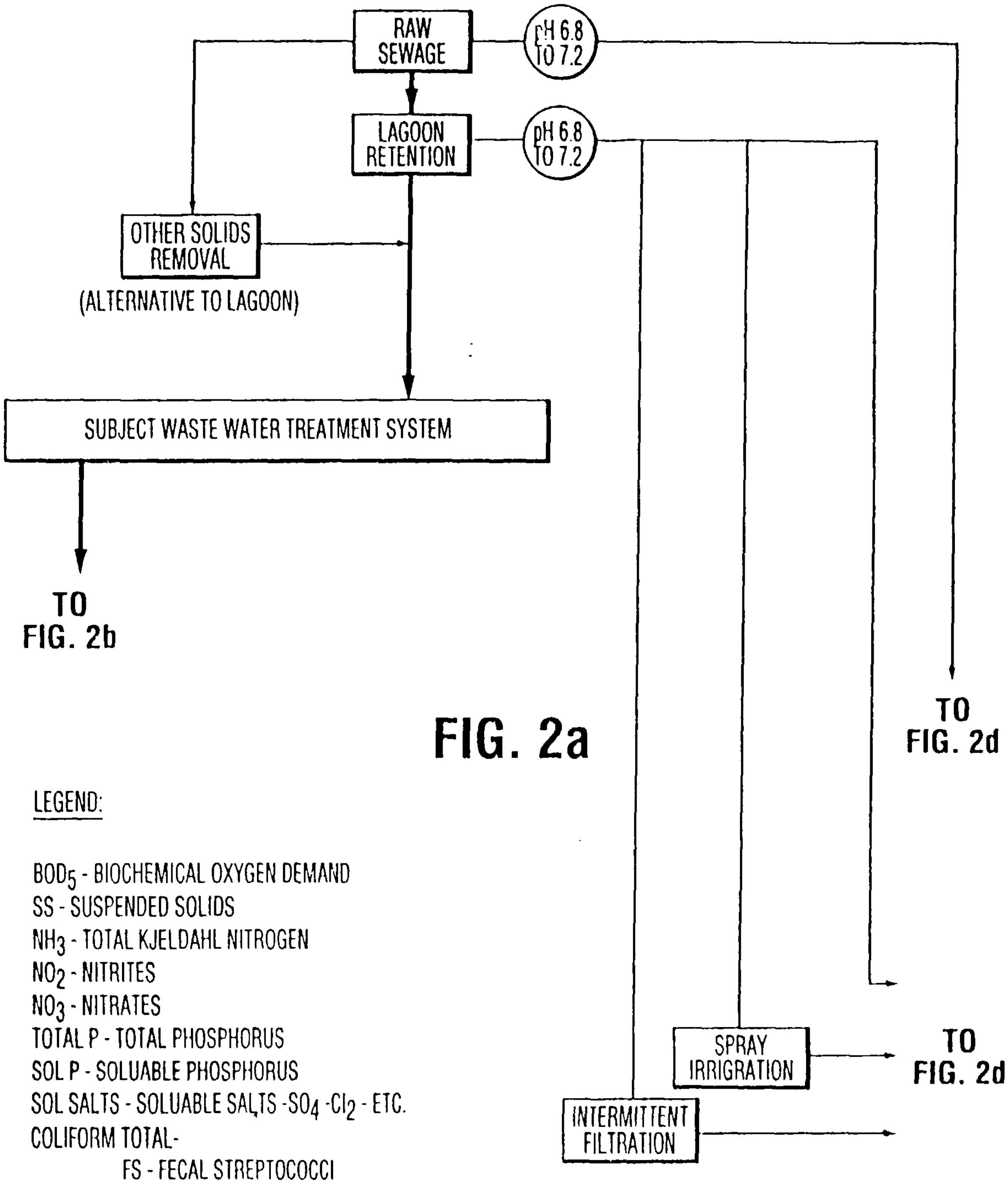


FIG. 2a

LEGEND:

$BOD_5$ - BIOCHEMICAL OXYGEN DEMAND
SS - SUSPENDED SOLIDS
$NH_3$ - TOTAL KJELDAHL NITROGEN
$NO_2$ - NITRITES
$NO_3$ - NITRATES
TOTAL P - TOTAL PHOSPHORUS
SOL P - SOLUABLE PHOSPHORUS
SOL SALTS - SOLUABLE SALTS -$SO_4$ -$Cl_2$ - ETC.
COLIFORM TOTAL-
FS - FECAL STREPTOCOCCI
FC - FECAL COLIFORM
ND - NO DETECTABLE CHANGE/OR/NON-DETECTABLE
L4 - L10 - LESS THAN 4 OR LESS THAN 10

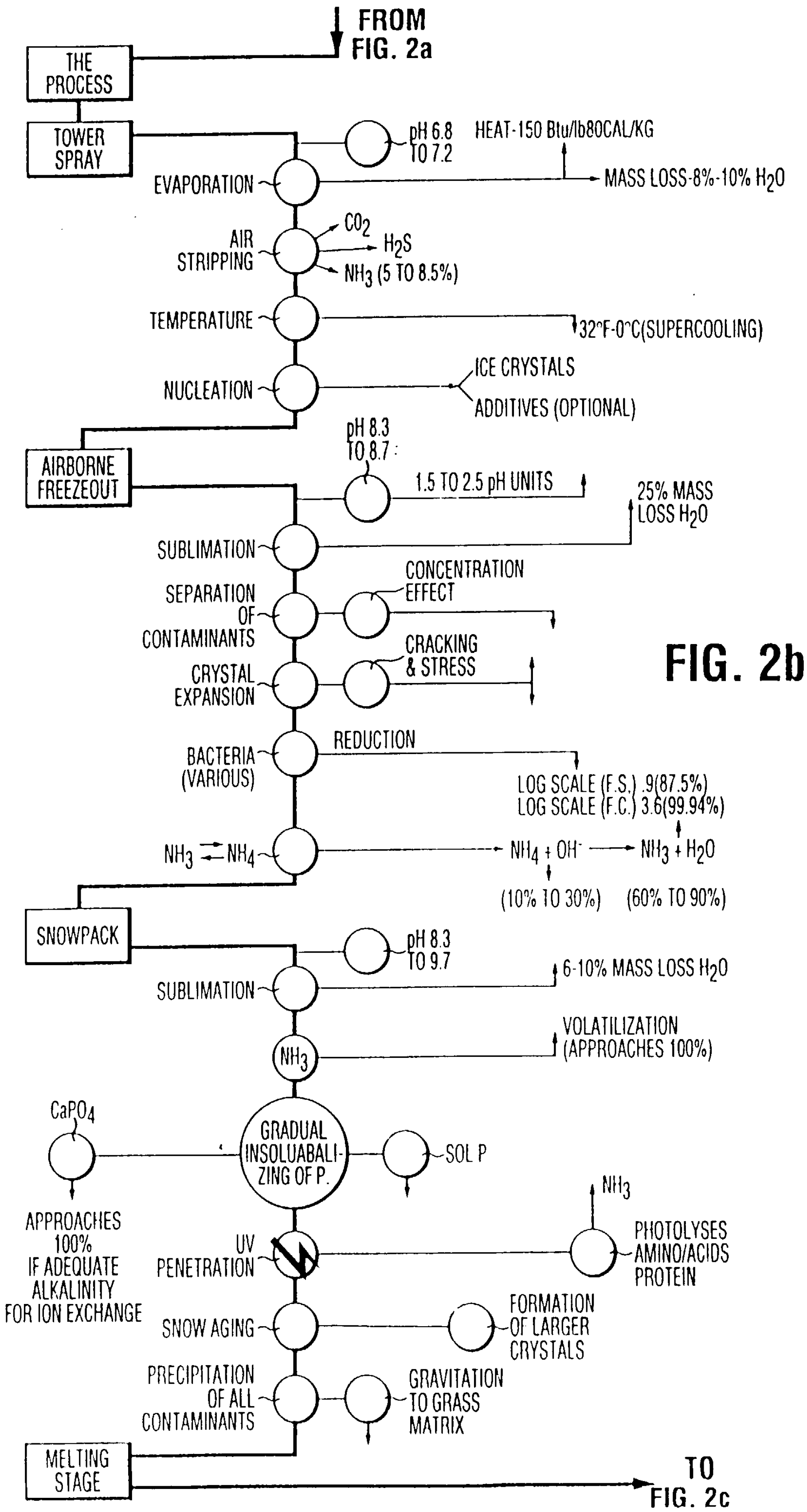
FROM FIG. 2a
THE PROCESS
TOWER SPRAY
pH 6.8 TO 7.2
HEAT-150 Btu/lb80CAL/KG
EVAPORATION
MASS LOSS-8%-10% $H_2O$
AIR STRIPPING
$CO_2$
$H_2S$
$NH_3$ (5 TO 8.5%)
TEMPERATURE
32°F-0°C(SUPERCOOLING)
NUCLEATION
ICE CRYSTALS
ADDITIVES (OPTIONAL)
AIRBORNE FREEZEOUT
pH 8.3 TO 8.7
1.5 TO 2.5 pH UNITS
25% MASS LOSS $H_2O$
SUBLIMATION
SEPARATION OF CONTAMINANTS
CONCENTRATION EFFECT
CRYSTAL EXPANSION
CRACKING & STRESS
BACTERIA (VARIOUS)
REDUCTION
LOG SCALE (F.S.) .9(87.5%)
LOG SCALE (F.C.) 3.6(99.94%)
$NH_3 \rightleftharpoons NH_4$
$NH_4 + OH^-$ → $NH_3 + H_2O$
(10% TO 30%)
(60% TO 90%)
SNOWPACK
pH 8.3 TO 9.7
SUBLIMATION
6-10% MASS LOSS $H_2O$
$NH_3$
VOLATILIZATION (APPROACHES 100%)
$CaPO_4$
GRADUAL INSOLUABALIZING OF P.
SOL P
APPROACHES 100% IF ADEQUATE ALKALINITY FOR ION EXCHANGE
$NH_3$
UV PENETRATION
PHOTOLYSES AMINO/ACIDS PROTEIN
SNOW AGING
FORMATION OF LARGER CRYSTALS
PRECIPITATION OF ALL CONTAMINANTS
GRAVITATION TO GRASS MATRIX
MELTING STAGE
TO FIG. 2c

FIG. 2b

FIG. 2c

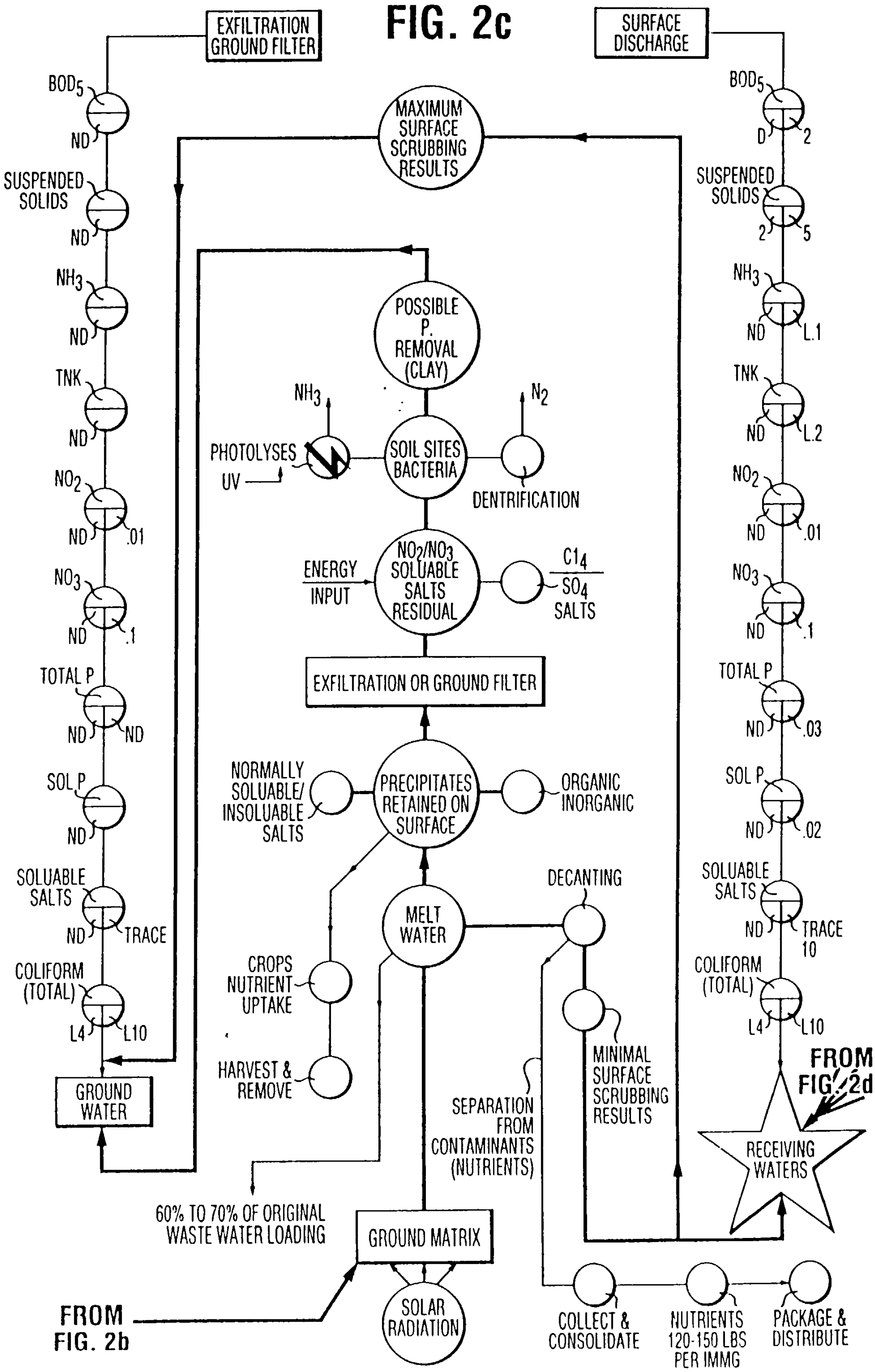
EXFILTRATION GROUND FILTER
SURFACE DISCHARGE
MAXIMUM SURFACE SCRUBBING RESULTS
BOD5
ND
SUSPENDED SOLIDS
NH3
TNK
NO2
.01
NO3
.1
TOTAL P
SOL P
SOLUABLE SALTS
TRACE
COLIFORM (TOTAL)
L4
L10
GROUND WATER
D
2
5
L.1
L.2
.03
.02
TRACE 10
POSSIBLE P. REMOVAL (CLAY)
NH3
N2
PHOTOLYSES
UV
SOIL SITES BACTERIA
DENTRIFICATION
ENERGY INPUT
NO2/NO3 SOLUABLE SALTS RESIDUAL
C14
SO4
SALTS
EXFILTRATION OR GROUND FILTER
NORMALLY SOLUABLE/ INSOLUABLE SALTS
PRECIPITATES RETAINED ON SURFACE
ORGANIC INORGANIC
DECANTING
CROPS NUTRIENT UPTAKE
MELT WATER
HARVEST & REMOVE
MINIMAL SURFACE SCRUBBING RESULTS
SEPARATION FROM CONTAMINANTS (NUTRIENTS)
FROM FIG. 2d
RECEIVING WATERS
60% TO 70% OF ORIGINAL WASTE WATER LOADING
GROUND MATRIX
FROM FIG. 2b
SOLAR RADIATION
COLLECT & CONSOLIDATE
NUTRIENTS 120-150 LBS PER IMMG
PACKAGE & DISTRIBUTE

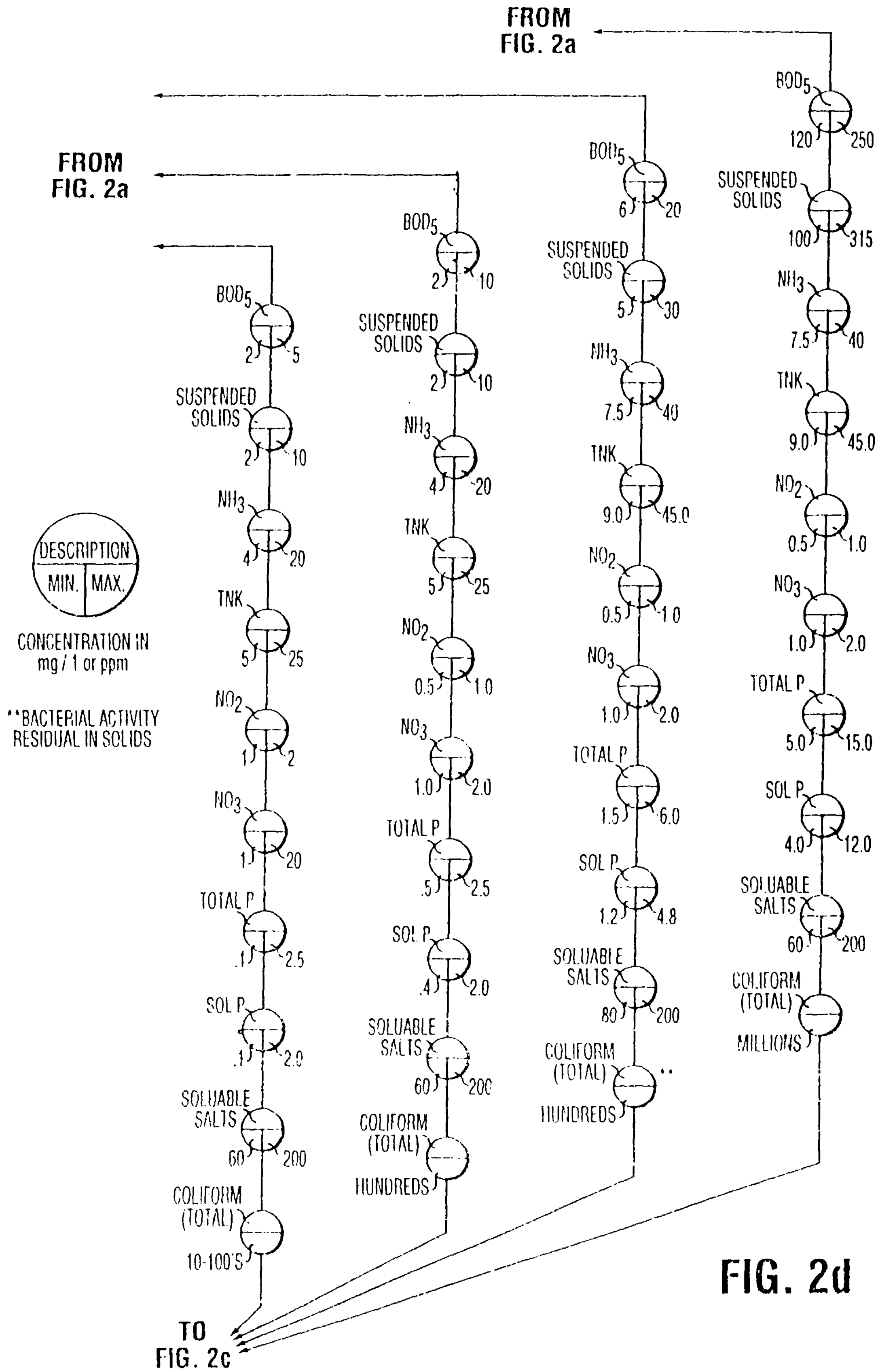
FROM
FIG. 2a
FROM
FIG. 2a
BOD5
120
250
SUSPENDED SOLIDS
100
315
NH3
7.5
40
TNK
9.0
45.0
NO2
0.5
1.0
NO3
1.0
2.0
TOTAL P
5.0
15.0
SOL P
4.0
12.0
SOLUABLE SALTS
60
200
COLIFORM (TOTAL)
MILLIONS
BOD5
6
20
SUSPENDED SOLIDS
5
30
NH3
7.5
40
TNK
9.0
45.0
NO2
0.5
1.0
NO3
1.0
2.0
TOTAL P
1.5
6.0
SOL P
1.2
4.8
SOLUABLE SALTS
80
200
COLIFORM (TOTAL)
HUNDREDS
BOD5
2
10
SUSPENDED SOLIDS
2
10
NH3
4
20
TNK
5
25
NO2
0.5
1.0
NO3
1.0
2.0
TOTAL P
.5
2.5
SOL P
.4
2.0
SOLUABLE SALTS
60
200
COLIFORM (TOTAL)
HUNDREDS
BOD5
2
5
SUSPENDED SOLIDS
2
10
NH3
4
20
TNK
5
25
NO2
1
2
NO3
1
20
TOTAL P
.1
2.5
SOL P
.1
2.0
SOLUABLE SALTS
60
200
COLIFORM (TOTAL)
10-100'S
DESCRIPTION
MIN.
MAX.
CONCENTRATION IN mg / 1 or ppm
**BACTERIAL ACTIVITY RESIDUAL IN SOLIDS
TO
FIG. 2c

FIG. 2d